# EUROPÄISCHE PATENTSCHRIFT

(11) **EP 1 785 338 B1**
(45) Veröffentlichungstag und Bekanntmachung des Hinweises auf die Patenterteilung: **04.03.2009**
(21) Anmeldenummer: 06021921.9
(22) Anmeldetag: 19.10.2006
(51) Int. Cl.: B62D 33/04

(54) **Runge für einen Nutzfahrzeug- oder Anhängerdachaufbau**
Stake for a utility vehicle or for a roof construction of a trailer
Ranche pour un véhicule utilitaire or pour la construction du toit d'une remorque

(30) Priorität: 09.11.2005 DE 202005017458 U
(43) Veröffentlichungstag der Anmeldung: 16.05.2007
(73) Patentinhaber: F. HESTERBERG & SÖHNE GmbH & Co. KG, 58256 Ennepetal (DE)
(72) Erfinder: Tiedtke, Henning, 58256 Ennepetal (DE); Matzke, Dieter, 58642 Iserlohn (DE)
(74) Vertreter: Christophersen, Ulrich Rudolf

(56) Entgegenhaltungen:
- WO-A-20/04002803
- DE-U1- 9 212 508

## Beschreibung

Die Erfindung betrifft eine Runge für den Aufbau eines Nutzfahrzeug- oder Anhängerdachaufbau.

Allgemein bekannt ist, dass Rungen zur Erzeugung von entsprechenden Öffnungsquerschnitten eines Nutzfahrzeug- oder Anhängerdachaufbaus zusammen mit Planenbereichen in Längs- oder Querrichtung des Nutzfahrzeug- oder Anhängerdachaufbaus verschiebbar sind. Zu diesem Zweck werden die Rungen mit so genannten Laufwagen versehen, wobei die Ausgestaltung der Laufwagen verhältnismäßig kompliziert ist, so dass hier ein hoher Kostenaufwand bei der Fertigung derartiger Elemente gegeben ist.

Durch die DE-U 296 18 264 ist ein Aufbau für Ladungen und Anhänger mit Dachgurten bekannt geworden, die in Eckbereichen des Aufbaus über Tragsäulen sowie über an Schlitten verschiebbaren Zungen gelagert sind und je eine Schiene zur Aufnahme der Rungenschlitten und von Führungselementen für Schiebeplanen sowie eine Nut zur Halterung eines Dichtbandes aufweisen.

Der DE-U 203 01 201 ist eine Runge, insbesondere für Fahrzeuge mit Planenaufbauten zum Transport so genannter Ladeeinheiten zu entnehmen, welche an ihrem oberen Ende mittels eines oberen Verlagerungsmittels entlang einer an der Karosserie oder dem Chassis eines Transportfahrzeuges angeordneten oberen linearen Längsstruktur beweglich führbar sind und mittels Feststellmitteln in einer Position entlang der Karosserie festsetzbar ist. Die Runge weist einen im Wesentlichen geradlinigen Mittelabschnitt auf, an welchem wenigstens einseitig Auskragungen derart ausgebildet sind, dass eine längsseitige Sicherung der Ladeeinheiten erreicht wird. Dachgerüstseitig weist die Runge einen mit mehreren Laufrollen bestückbaren Laufwagen auf.

Eine Runge für den Aufbau eines Nutzfahrzeug- oder Anhängendachaufbaus ist aus der WO 2004/002803 bekannt.

Ziel des Erfindungsgegenstandes ist es, eine Runge für den Aufbau eines Nutzfahrzeug- oder Anhängerdachaufbaus bereitzustellen, die einerseits einen einfach bauenden Rungengrundkörper aufweist und die andererseits mit einem ebenfalls einfach bauenden Laufwagen bestückbar sein soll. Darüber hinaus soll in einfacher Weise ein Austausch von Laufrollen möglich sein, um unterschiedlichsten konstruktiven Gegebenheiten des jeweiligen Dachgurtprofils zur Aufnahme der Laufrollen gerecht werden zu können.

Diese Aufgabe wird erfindungsgemäß gelöst durch eine Runge für den Aufbau eines Nutzfahrzeug- oder Anhängerdachaufbaus gemäß Anspruch 1.

Vorteilhafte Weiterbildungen des Erfindungsgegenstandes sind den Unteransprüchen zu entnehmen.

Abweichend vom Stand der Technik wird somit ein einfach bauender, aus wenigen Teilen bestehender Laufwagen im freien Endbereich des Rungengrundkörpers gebildet, wobei die einzelnen Teile leicht gegeneinander ausgetauscht werden können, um somit unterschiedlichsten Querschnittsgegebenheiten von Führungsbereichen im Bereich des Dachgurtes gerecht werden zu können. Durch Reduzierung der Querschnittsform des Rungengrundkörpers bei gleichzeitiger Abkröpfung des freien Endbereiches können nun verhältnismäßig dünne, den jeweiligen Laufwagengrundkörper bildende Bleche zum Einsatz gelangen. Infolge der Abkröpfung wird die notwendige Steifigkeit in diesem Bereich erzeugt, so dass eine lange Standzeit des jeweiligen Rungengrundkörpers gegeben ist.

In seiner einfachsten Ausgestaltungsform wird der Laufwagengrundkörper durch ein abgewinkeltes Blechprofil gebildet. Der dem abgekröpften Endbereich zugewandte Schenkel des Blechkörpers kann beispielsweise durch Schrauben, Nieten oder Verschweißen mit dem jeweiligen Endbereich fest oder auswechselbar verbunden werden.

Der querschnittsmäßig verjüngte und abgekröpfte Endbereich verläuft, einem weiteren Gedanken der Erfindung gemäß, im Wesentlichen parallel zum restlichen vertikal verlaufenden Bereich des Rungengrundkörpers. Dachgurtseitig weist der Schenkel des Blechprofils einen Schlitz zur Aufnahme eines, im Querschnitt etwa T-förmig ausgebildeten, in seinen freien Endbereichen mit Laufrollen versehenen Laufwagens auf. Das freie vertikale Ende des Laufwagens kann vorteilhafterweise - vom abgekröpften Endbereich des Rungengrundkörpers wegweisend - abgebogen sein. Hiermit wird eine Einfädelhilfe für den Laufwagen erzeugt, die im Einbauzustand, selbst bei vertikaler Auslenkung des Laufwagens, relativ zum dachgurtseitigen Schenkel des Blechprofils, nicht zu einem Herausrutschen des Laufwagens aus dem Bereich des Blechprofils führen kann. Beim Verschwenken der Runge kann dieser abgebogene Bereich darüber hinaus auch noch einen Anschlag begründen, um übermäßige Schwenkwinkel der Runge relativ zum Dachgurt zu vermeiden.

Soll der Laufwagengrundkörpers selber als Aufnahmeelement für Laufrollen ausgebildet werden, so besteht, einem weiteren Gedanken der Erfindung gemäß, die Möglichkeit, selbigen über die Breite des Rungengrundkörpers hinaus zu verlängern. In den freien Endbereichen können dann Schlitze zur Aufnahme von mit Laufrollen versehenen Schwertern vorgesehen werden, wobei die Schwerter außerhalb der Laufrollen mit Sicherungselementen versehen sind. Somit ist auch hier ein definierter vertikaler Hub der Laufrollen relativ zum dachgurtseitigen Schenkel möglich, ohne dass das jeweilige Schwert aus dem zugeordneten Schlitz des dachgurtseitigen Schenkels des Blechprofils herausrutschen kann. Damit es zu keiner Beschädigung beim Verschieben der jeweiligen Plane kommt, sind vorteilhafterweise die freien Enden des Vertikalschenkels des Blechkörpers - vom Rungengrundkörper wegweisend - abgebogen.

Bedarfsweise kann zwischen dem abgekröpften freien Endbereich des Rungengrundkörpers und dem zugeordneten Vertikalschenkel des Blechprofils ein zusätzliches Stegblech vorgesehen werden, das vertikal über den dachgurtseitigen Schenkel des Blechkörpers vorsteht und in der dachgurtseitigen Führung für die Laufrollen mit eingreift. Dieses Stegblech dient bei Kippbewegungen des Rungengrundkörpers relativ zum Laufschienenprofil des Dachgurtes als Anschlagelement, so dass nur eine begrenzte Auslenkung der Runge möglich ist, aber auch um von innen wirkende Kräfte auf den Rungenkörper in den Dachgurt einzuleiten.

Der Erfindungsgegenstand ist anhand eines Ausführungsbeispiels in der Zeichnung dargestellt und wird wie folgt beschrieben. Es zeigen:
- Figur 1: Prinzipskizze eines Rungengrundkörpers samt Laufwagenbereich im Anbindungsbereich eines nur angedeuteten Dachgurtes eines Nutzfahrzeug- oder Anhängerdachaufbaus;
- Figur 2: Teilansicht des Rungengrundkörpers samt Laufwagen gemäß Figur 1;
- Figur 3: Alternative Ausgestaltung eines Laufwagenbereiches für ein Rungenprofil;
- Figur 4: Alternative Querschnittsform eines Rungenprofils;
- Figur 5: Andere perspektivische Darstellung zu Figur 3.

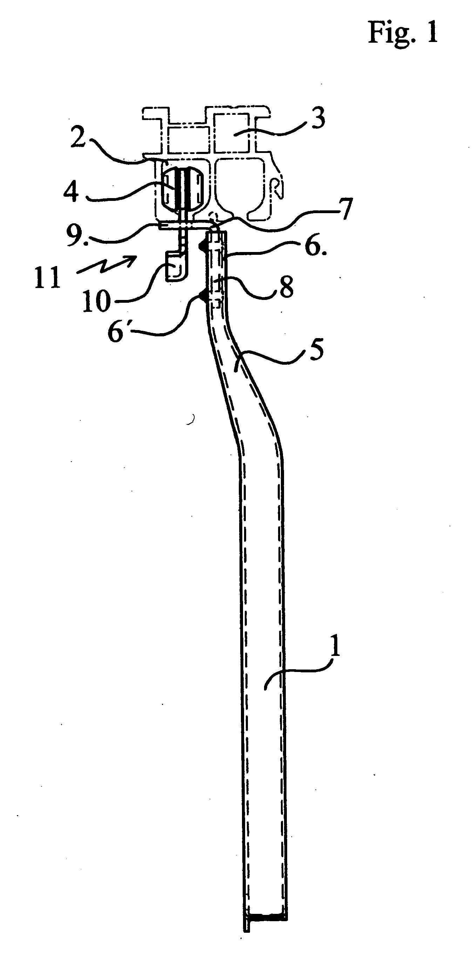

Figur 1 zeigt einen Rungengrundkörper 1, der in diesem Beispiel ein C-förmiges Querschnittsprofil aufweisen soll. Der Rungengrundkörper 1 soll zur Führung im Bereich einer Laufschiene 2 eines nur angedeuteten Dachgurtes 3 mit einer Laufrolle 4 versehen werden. Dachgurtseitig ist der Rungengrundkörper 1 erfindungsgemäß mit einem abgekröpften Bereich 5 versehen, wobei sich der Querschnitt des Rungengrundkörpers 1 über den abgekröpften Bereich 5 in Richtung des freien Endes 6 des Rungengrundkörpers 1 verjüngt. Das verjüngte freie Ende 6 verläuft im Wesentlichen parallel zum Rungengrundkörper 1. Die C-förmige Querschnittsform des Rungengrundkörpers 1 bleibt auch im Bereich des freien Endes 6 erhalten. Um die Laufrolle 4 nun in Wirkverbindung mit dem Rungengrundkörper 1, respektive dem freien Ende 6, zu bringen, kommt ein aus Blech etwa rechtwinklig abgebogener Laufwagengrundkörper 7 zum Einsatz, wobei der dem freien Ende 6 zugewandte Schenkel 8 in diesem Beispiel über Niete 6' mit dem freien Ende 6 fest verbunden ist. Der dachgurtseitige Schenkel 9 des Laufwagengrundkörpers 7 dient zur Aufnahme eines mit einer durch eine Abbiegung erzeugte Einfädelhilfe 10 versehenen Laufwagen 11.

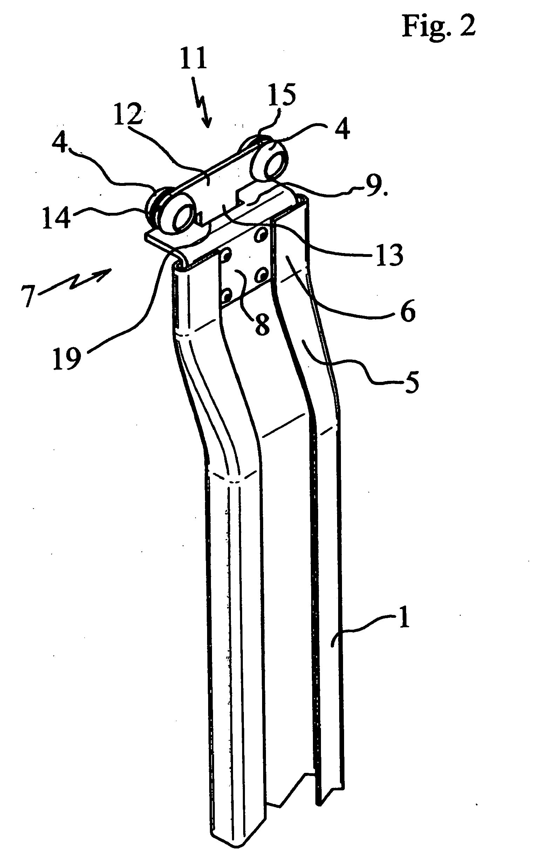

Figur 2 zeigt den Rungengrundkörper 1 gemäß Figur 1. Dargestellt ist der abgekröpfte Bereich 5 sowie das freie Ende 6, wobei hier erkennbar ist, dass der C-förmige Querschnitt des Rungengrundkörpers 1 trotz Querschnittsreduzierung im abgekröpften Bereich 5 und im Bereich des freien Endes 6 erhalten bleibt. Ferner erkennbar sind der endbereichsseitige Schenkel 8 sowie der dachgurtseitige Schenkel 9, die in diesem Beispiel den Laufwagengrundkörper 7 bilden. Der Laufwagen 11 wird gebildet durch den Laufwagengrundkörper 7 und ein T-förmiges Blech, beinhaltend einen Horizontalschenkel 12 und einen Vertikalschenkel 13. Der Vertikalschenkel 13 beinhaltet - wie bereits in Figur 1 dargestellt - die Einfädelhilfe (hier nicht erkennbar). Die freien Endbereiche 14,15 des Horizontalschenkels 12 sind mit Laufrollen 4 versehen.

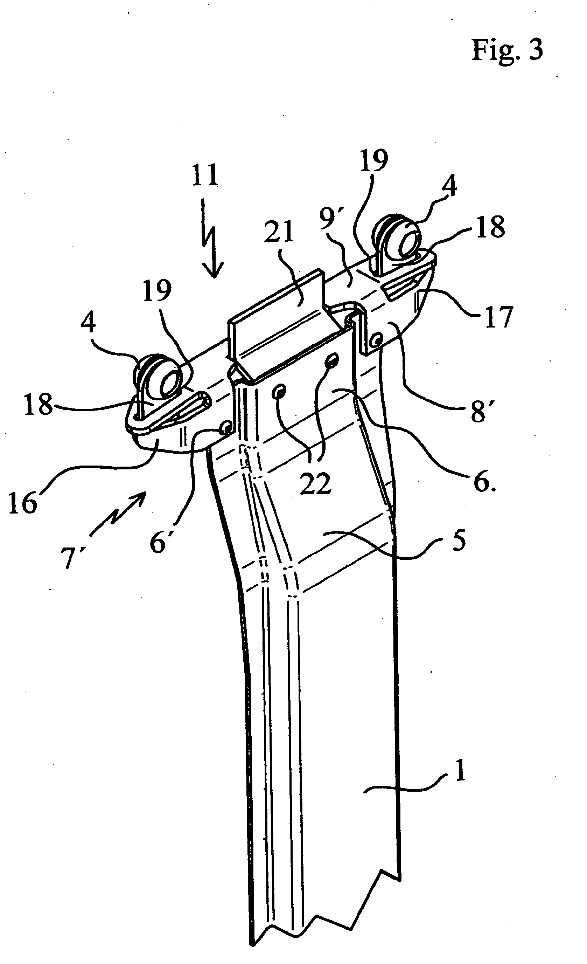

Die Figuren 3 bis 5 zeigen alternative Ausführungsformen zu den Figuren 1 und 2. Hierbei ist der jeweilige Rungengrundkörper 1 mit andersartigen Querschnittsprofilen versehen.

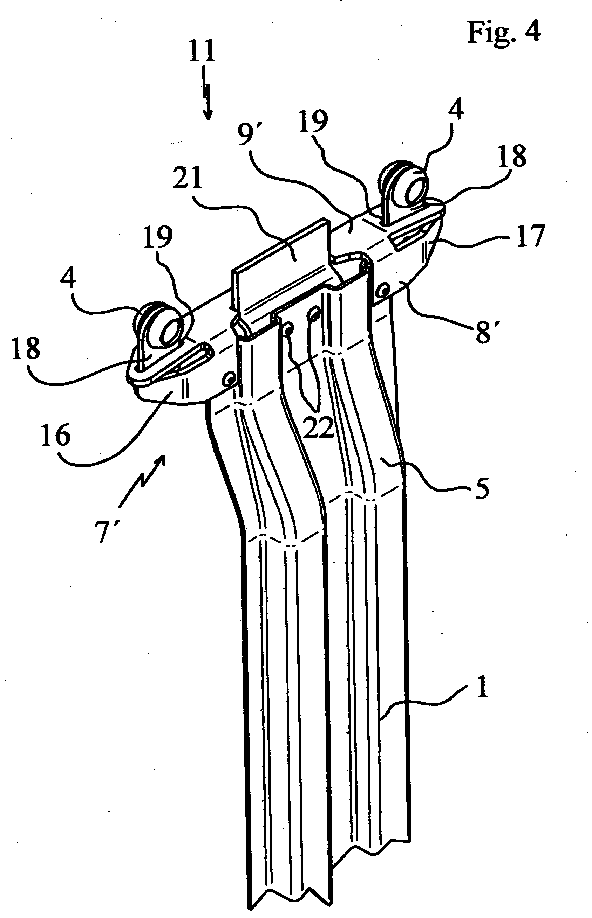

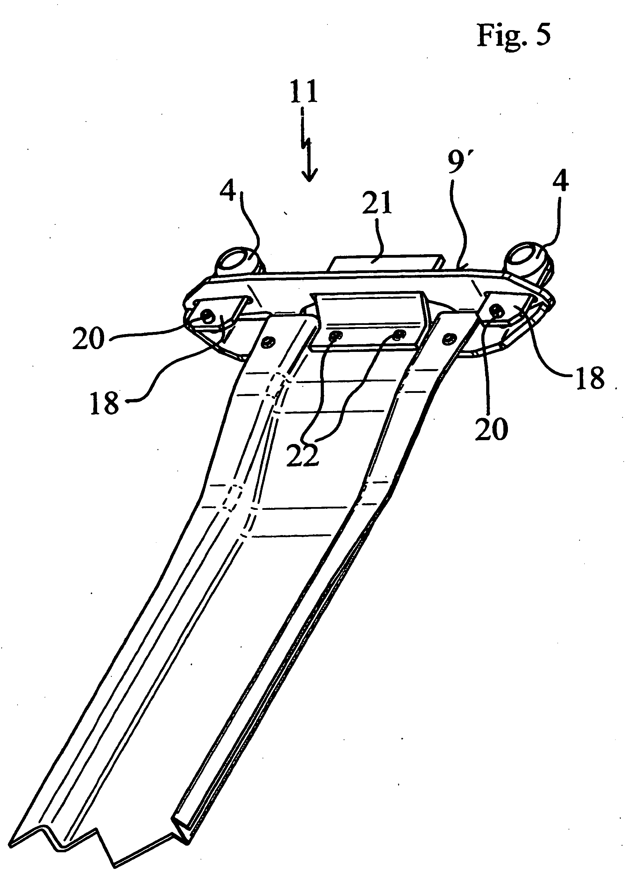

Bei dem Rungengrundkörper 1 gemäß Figuren 3 und 5 kommt ein so genanntes Hutprofil zum Einsatz, während der Rungengrundkörper 1 gemäß Figur 4 mit einem so genannten M-Profil ausgebildet ist. In gleicher Weise wie bei den Figuren 1 und 2 dargestellt, kommt auch hier ein abgewinkelter Laufwagengrundkörper 7' zum Einsatz, der zur Aufnahme von Laufrollen 4 vorgesehen ist. Der Laufwagengrundkörper 7' ist als Stanzbiegeteil ausgebildet und weist in Analogie zu den Figuren 1 und 2 einerseits einen endbereichsseitigen Schenkel 8' und andererseits einen dachgurtseitigen Schenkel 9' auf. Auch hier sind im Bereich des freien Endes 6 außerhalb des abgekröpften Bereiches 5 des Rungengrundkörpers 1 Verbindungselemente 6' gegeben, die den endbereichsseitigen Schenkel 8' mit dem freien Ende 6 des Rungengrundkörpers 1 verbinden. Die freien Endbereiche 16,17 des endbereichsseitigen Schenkel 8' sind, zur Vermeidung von Beschädigungen an einer nicht weiter dargestellten Plane - vom Rungengrundkörper 1 wegweisend - abgebogen.

Jede Laufrolle 4 wirkt mit einem aus Blech bestehenden Schwert 18 zusammen, das durch einen Schlitz 19 im Horizontalschenkel 9' hindurch gesteckt wird.

Wie in Figur 5 erkennbar, sind die Schwerter 18 außerhalb des dachgurtseitigen Schenkels 9' mit Sicherungselementen 20 versehen, so dass auch bei Vertikalhub der Laufrollen 4 ein unbeabsichtigtes Herausrutschen des jeweiligen Schwertes 18 aus dem zugehörigen Schlitz 19 nicht möglich ist.

In den Figuren 3 bis 5 sind zusätzliche Stegbleche 21 erkennbar, die zwischen den Laufrollen 4 in vertikaler Richtung vorgesehen sind und über Verbindungselemente, beispielsweise Niete 22, mit dem freien Ende 6 des Rungengrundkörpers 1 verbunden sind. Diese Stegbleche 21 dienen als Anschläge bei Verkantungen der Laufrollen 4 innerhalb des in Figur 1 dargestellten Dachgurtes 3. Das Stegblech 21 ist der jeweiligen Kontur des Rungengrundkörpers 1 in entsprechender Weise angepasst, wobei sich danach auch die Ausgestaltungsform des Laufwagengrundkörpers 7' ergibt.

### Bezugszeichenliste

- 1: Rungengrundkörper
- 2: Laufschiene
- 3: Dachgurt
- 4: Laufrolle
- 5: abgekröpfter Bereich
- 6: freies Ende
- 6': Niet/Verbindungselement
- 7: Laufwagengrundkörper
- 7': Laufwagengrundkörper
- 8: endbereichsseitiger Schenkel
- 8': endbereichsseitiger Schenkel
- 9: dachgurtseitiger Schenkel
- 9': dachgurtseitiger Schenkel
- 10: Einfädelhilfe
- 11: Laufwagen
- 12: Horizontalschenkel
- 13: Vertikalschenkel
- 14: freier Endbereich
- 15: freier Endbereich
- 16: freier Endbereich
- 17: freier Endbereich
- 18: Schwert
- 19: Schlitz
- 20: Sicherungselement
- 21: Stegblech
- 22: Niet

## Patentansprüche

1. Runge für den Aufbau eines Nutzfahrzeug- öder Anhängerdachaufbaus, beinhaltend einen aus Blech erzeugten Rungengrundkörper (1) mit vorgebbarem Querschnitt, der dachgurtseitig unter Verjüngung seiner Querschnittsform einen abgekröpften Bereich (5) aufweist, dessen freies Ende (6) zur Aufnahme eines mit Laufrollen (4) bestückten, respektive bestückbaren, aus Blech bestehenden Laufwagengrundkörpers (7,7') vorgesehen ist
und
der Querschnitt des Rungengrundkörpers (1), ist etwa C-, M- oder hutförmig ausgebildet **dadurch gekennzeichnet, dass** die jeweils gewählte Querschnittsform auch nach der Querschnittsverjungung und der Abkröpfung (5) am freien Ende (6) des Rungengrundkörpers (1) erhalten bleibt.

2. Runge nach Anspruch 1, **dadurch gekennzeichnet, dass** das verjüngte freie Ende (6) im Wesentlichen parallel zum restlichen Bereich des Rungengrundkörpers (1) verläuft.

3. Runge nach einem der Ansprüche 1 und/oder Anspruch 2, **dadurch gekennzeichnet, dass** der Laufwägengrundkörper (7,7') durch ein abgewinkeltes Blechprofil (8,9,8',9') gebildet ist.

4. Runge nach einem der Ansprüche 1 bis 3, **dadurch gekennzeichnet, dass** der dem freien Ende (6) zugewandte Schenkel (8.8') des Laufwagengrundkörpers (7,7') durch Schrauben, Nieten (6',22) oder Schweissen mit dem freien Ende (6) fest verbunden ist.

5. Runge nach einem der Ansprüche 1 bis 4, **dadurch gekennzeichnet, dass** der Laufwagengrundkörper (7,7') ausserhalb des Schenkels (8,8') dachgurtseitig mit mindestens einem Schlitz (19) versehen ist, der zur unmittelbaren Aufnahme von Laufrollen (4) oder zur mittelbaren Aufnahme einzelner Laufrollen (4) dient.

6. Runge nach einem der Ansprüche 1 bis 5, **dadurch gekennzeichnet, dass** ein T-förmig ausgebildetes Blech am Horizontalschenkel (12) im Bereich seiner freien Enden (14,15) die Laufrollen (4) aufnimmt.

7. Runge nach einem der Ansprüche 1 bis 6, **dadurch gekennzeichnet, dass** die Länge des Horizontalschenkels (12) in etwa der Breite des dachgurtseitigen Endes des Laufwagengrundkörpers (7) entspricht.

8. Runge nach einem der Ansprüche 1 bis 7, **dadurch gekennzeichnet, dass** der Vertikalschenkel (13) des T-förmig ausgebildeten Blechs, in seinem freien Endbereich eine im Einbauzustand unverlierbare Einfädelhilfe (10) bildet und vom Rungenkörper (1) wegweisend abgebogen ist.

9. Runge nach einem der Ansprüche 1 bis 8, **dadurch gekennzeichnet, dass** der Laufwagengrundkörper (7') breiter als das freie Ende (6) des Rungengrundkörpers (1) ausgebildet ist, und dass in den freien Endbereichen des dachgurtseitigen Schenkels (9') Schlitze (19) zur Aufnahme von etwa schwertartig ausgebildeten dachgurtseitig mit Laufrollen (4) bestückten Schwertern (18) eingebracht sind.

10. Runge nach einem der Ansprüche 1 bis 9, **dadurch gekennzeichnet, dass** das jeweilige schwertartig ausgebildete Blech (18) ausserhalb seiner Laufrollen (4) mit einem, ein Herausrutschen aus dem Schlitz (19) im Betriebszustand verhinderndes, Sicherungselement (20) versehen ist.

11. Runge nach einem der Ansprüche 1 bis 10, **dadurch gekennzeichnet, dass** die freien Endbereiche (16,17) des endbereichsseitigen Schenkels (8'), vom Rungengrundkörper (1) wegweisend, abgebogen sind.

12. Runge nach einem der Ansprüche 1 bis 11, **dadurch gekennzeichnet, dass** zwischen dem Ende (6) und dem Schenkel (8') ein über das Ende (6) des Rungengrundkörpers (1) hinausragendes Stegblech (21) positioniert ist.

13. Runge nach einem der Ansprüche 1 bis 12, **dadurch gekennzeichnet, dass** die Laufrollen (4) mit einer, der Querschnittsform der dachgurtseitigen Führungsschiene (2) im Wesentlichen entsprechenden Kontur versehen sind.

## Claims

1. Stake for the assembly of a roof construction of a utility vehicle or trailer, comprising a main stake body (1) which is produced from sheet metal, has a predeterminable cross section and, on the roof-flange side, has, by its cross-section shape being tapered, an offset region (5), the free end (6) of which is provided for receiving a main carriage body (7, 7') which is equipped or can be equipped with castors (4) and is composed of sheet metal, and the cross section of the main stake body (1) is of approximately C-, M-or hat-shaped design, **characterized in that** the respectively selected cross-sectional shape is maintained even after the cross-sectional tapering and the offsetting (5) at the free end (6) of the main stake body (1).

2. Stake according to Claim 1, **characterized in that** the tapered free end (6) runs substantially parallel to the remaining region of the main stake body (1).

3. Stake according to either Claim 1 and/or Claim 2, **characterized in that** the main carriage body (7, 7') is formed by an angled sheet-metal profile (8, 9, 8', 9').

4. Stake according to one of Claims 1 to 3, **characterized in that that** limb (8, 8') of the main carriage body (7, 7') which faces the free end (6) is connected fixedly to the free end (6) by screwing, riveting (6', 22) or welding.

5. Stake according to one of Claims 1 to 4, **characterized in that** the main carriage body (7, 7') is provided, on the roof-flange side outside the limb (8, 8'), with at least one slot (19) which serves to directly receive castors (4) or to indirectly receive individual castors (4).

6. Stake according to one of Claims 1 to 5, **characterized in that** a metal sheet of T-shaped design on the horizontal limb (12) receives the castors (4) in the region of the free ends (14, 15) of said horizontal limb.

7. Stake according to one of Claims 1 to 6, **characterized in that** the length of the horizontal limb (12) approximately corresponds to the width of that end of the main carriage body (7) which is on the roof-flange side.

8. Stake according to one of Claims 1 to 7, **characterized in that** the vertical limb (13) of the metal sheet of T-shaped design forms, in the free end region thereof, an insertion aid (10) which is captive in the fitted state and is bent such that it points away from the stake body (1).

9. Stake according to one of Claims 1 to 8, **characterized in that** the main carriage body (7') is of wider design than the free end (6) of the main stake body (1), and **in that** slots (19) are made in the free end regions of the limb (9') on the roof-flange side, said slots being intended for receiving tongues (18) which are of approximately sword-like design and are equipped on the roof-flange side with castors (4).

10. Stake according to one of Claims 1 to 9, **characterized in that** the respective metal sheet (18) of sword-like design is provided, outside its castors (4), with a securing element (20) which, in the operating state, prevents it from slipping out of the slot (19).

11. Stake according to one of Claims 1 to 10, **characterized in that** the free end regions (16, 17) of the limb (8') on the end region side are bent such that they point away from the main stake body (1).

12. Stake according to one of Claims 1 to 11, **characterized in that** a web plate (21) which projects beyond the end (6) of the main stake body (1) is positioned between the end (6) and the limb (8').

13. Stake according to one of Claims 1 to 12, **characterized in that** the castors (4) are provided with a contour which substantially corresponds to the cross-sectional shape of the guide rail (2) on the roof-flange side.

## Revendications

1. Rancher pour la structure porteuse d'un toit pour véhicule utilitaire ou pour remorque, comportant un corps de rancher (1) réalisé en tôle et ayant une section pouvant être prédéfinie, lequel, du côté de la membrure du toit, moyennant un effilement de la forme de la section, comporte une zone (5) coudée dont l'extrémité libre (6) est prévue pour recevoir un corps de chariot (7, 7'), réalisé en tôle, équipé ou apte à être équipé de roulettes (4), et la section du corps de rancher (1) est réalisée sensiblement en forme de C, de M ou de U renversé,
**caractérisé en ce que** la forme de section choisie dans chaque cas reste maintenue également en aval de la section effilée et du coude (5) au niveau de l'extrémité libre (6) du corps de rancher (1).

2. Rancher selon la revendication 1, **caractérisé en ce que** l'extrémité libre (6) effilée est sensiblement parallèle à la partie restante du corps de rancher (1).

3. Rancher selon la revendication 1 et / ou la revendication 2, **caractérisé en ce que** le corps de chariot (7, 7') est formé par un profilé en tôle (8, 9, 8', 9') plié.

4. Rancher selon l'une quelconque des revendications 1 à 3, **caractérisé en ce que** la branche (8, 8') du corps de chariot (7, 7'), orientée vers l'extrémité libre (6), est assemblée de manière fixe à l'extrémité libre (6) par des vis, des rivets (6', 22) ou par soudage.

5. Rancher selon l'une quelconque des revendications 1 à 4, **caractérisé en ce que** le corps de chariot (7, 7') est muni, du côté de la membrure du toit, en dehors de la branche (8, 8'), d'au moins une fente (19) qui est destinée à recevoir directement les roulettes (4) ou à recevoir indirectement des roulettes (4) individuelles.

6. Rancher selon l'une quelconque des revendications 1 à 5, **caractérisé en ce qu'**une tôle en forme de T, sur la branche horizontale (12), reçoit les roulettes (4) dans la zone de ses extrémités libres (14, 15).

7. Rancher selon l'une quelconque des revendications 1 à 6, **caractérisé en ce que** la longueur de la branche horizontale (12) correspond à peu près à la largeur de l'extrémité du corps de chariot (7) du côté de la membrure du toit.

8. Rancher selon l'une quelconque des revendications 1 à 7, **caractérisé en ce que** la branche verticale (13) de la tôle en forme de T forme, dans sa zone d'extrémité libre, un auxiliaire d'introduction (10) imperdable à l'état monté, et est coudée en s'écartant du corps de rancher (1).

9. Rancher selon l'une quelconque des revendications 1 à 8, **caractérisé en ce que** le corps de chariot (7') est réalisé plus large que l'extrémité libre (6) du corps de rancher (1), et **en ce que**, dans les zones d'extrémité libre de la branche (9'), du côté de la membrure du toit, sont réalisées des fentes (19) destinées à recevoir des semelles (18) sensiblement ensiformes, munies de roulettes (4) du côté de la membrure du toit.

10. Rancher selon l'une quelconque des revendications 1 à 9, **caractérisé en ce que** la tôle (18), réalisée dans chaque cas avec une forme de type ensiforme, est munie, outre ses roulettes (4), d'un élément de blocage (20) empêchant que ladite tôle puisse glisser hors de la fente (19) en position de service.

11. Rancher selon l'une quelconque des revendications 1 à 10, **caractérisé en ce que** les zones d'extrémité libre (16, 17) de la branche (8') du côté des zones d'extrémité sont.coudées en s'écartant du corps de rancher (1).

12. Rancher selon l'une quelconque des revendications 1 à 11, **caractérisé en ce qu'**une traverse (21), s'avançant en saillie au-delà de l'extrémité (6) du corps de rancher (1), est positionnée entre l'extrémité (6) et la branche (8').

13. Rancher selon l'une quelconque des revendications 1 à 12, **caractérisé en ce que** les roulettes (4) ont un contour correspondant sensiblement à la forme de la section du rail de guidage (2) du côté de la membrure du toit.
